# EUROPEAN PATENT SPECIFICATION

(11) **EP 3 715 045 B1**
(45) Date of publication and mention of the grant of the patent: **20.12.2023**
(21) Application number: 17932734.1
(22) Date of filing: 22.11.2017
(51) Int. Cl.: B23Q 1/26, B23Q 1/54, B23Q 16/00

(54) **MACHINE TOOL**
WERKZEUGMASCHINE
MACHINE-OUTIL

(43) Date of publication of application: 30.09.2020
(73) Proprietor: Makino Milling Machine Co., Ltd., Tokyo 152-8578 (JP)
(72) Inventor: TAKAHASHI, Ikuma, Aiko-gun Kanagawa 243-0303 (JP)
(74) Representative: McWilliams, David John
(86) International application number: PCT/JP2017/042076
(87) International publication number: WO 2019/102561

(56) References cited:
- EP-A1- 3 045 265
- WO-A1-2011/064816
- JP-A- H1 177 459
- JP-A- 2007 072 278
- JP-A- 2008 232 197
- JP-A- 2008 232 197
- JP-A- 2010 140 312
- JP-A- 2010 140 312
- JP-A- 2013 065 254
- JP-A- 2015 157 336

## Description

### FIELD

The present invention relates to a machine tool comprising two rotary feed axes for controlling the posture of a tool and three linear feed axes for moving the position of a workpiece relative to the tool.

### BACKGROUND

In machine tools comprising two rotary feed axes in addition to orthogonal three-axis linear feed axes, singularities are present in the operating range of the machine. When a feed axis passes through a singularity, even if the tool posture change commanded by the machining program is small, the tool posture may actually change significantly, and the speeds of the rotary feed axes and the linear feed axes may increase rapidly.

Patent Literature 1 discloses a numerical control device for five-axis machine tools which can prevent significant movements in the rotational axis speed or acceleration at singularities when it is determined in tool posture control that a singularity is to be encountered.

### [CITATION LIST]

### [PATENT LITERATURE]

[PTL 1] Japanese Unexamined Patent Publication (Kokai) No. 2010-140312
[PTL 2] An example of a machine tool feed rod device is described in EP 3 045 265 A1.

The preamble of appended claim 1 is based on PTL 2.

### SUMMARY

### [TECHNICAL PROBLEM]

The numerical control device for five-axis machine tools of Patent Literature 1 determines whether the spindle for rotating a tool will pass through a singularity or will pass through the vicinity of a singularity by calculation based on the command at a command block start point and the command at a command block end point in a machining program, and when it is determined that the spindle will pass through a singularity or the vicinity of a singularity, by changing the tool path at the singularity and the vicinity of the singularity, the singularity can be avoided by means of software. However, in the invention of Patent Literature 1, since the tool path is changed at a singularity or in the vicinity of the singularity, there is a problem that the machined surface may have differences in shape from the desired shape.

The present invention seeks to solve the problem of the prior art as a technical problem, and aims to provide a machine tool which can solve the problem of singularities by means of hardware rather than solving the problem of singularities by means of software.

### [SOLUTION TO PROBLEM]

In order to achieve the object described above, according to the present invention, there is provided a machine tool including two rotary feed axes for controlling the posture of a tool and a linear feed axis for moving the position of a workpiece relative to the tool as defined in claim 1.

### [ADVANTAGEOUS EFFECTS OF INVENTION]

According to the present invention, since the problem of singularities is solved by means of hardware by providing a restricting means which limits the rotary feed range of the spindle head so that the spindle axis of rotation is neither parallel nor coincident with the second axis, which is orthogonal to the first axis, which is the axis of rotation of the spindle head, and intersects the vertical direction at a predetermined inclination angle, significant changes in tool posture and rapid increases in the speeds of the rotary feed axes and the linear feed axis can be prevented, and in addition to preventing machining marks from being formed on the machined surface, if the machining program does not include commands which pass through a singularity, the rotary feed axis device operates smoothly and a suitable machined surface can be obtained.

### BRIEF DESCRIPTION OF DRAWINGS

FIG. 1 is a partially broken side view showing a machine tool according to a preferred embodiment of the present invention.
FIG. 2 is a front view of the machine tool of FIG. 1.
FIG. 3 is a partially enlarged cross-sectional view of A-axis and C-axis rotary feed axes at origin positions.
FIG. 4 is a partially enlarged cross-section view similar to FIG. 3 when the A-axis is in a maximum rotational position.
FIG. 5 is a partially enlarged cross-sectional view similar to FIG. 3 when the A-axis is in a minimum rotational position.
FIG. 6 is a schematic view showing a vector representing a tool tip direction when the A-axis and C-axis rotary feed axes are in origin positions.
FIG. 7 is a schematic view similar to FIG. 6 illustrating the movement range of the A-axis rotary feed axis.
FIG. 8 is a schematic view similar to FIG. 6 illustrating the movable ranges of the A-axis and C-axis rotary feed axes.
FIG. 9 is a schematic view illustrating the range in which the tip of a tool can be positioned according to present embodiment.
FIG. 10 is a partially enlarged cross-sectional view similar to FIG. 3 illustrating restricting means according to another embodiment.

### DESCRIPTION OF EMBODIMENTS

The preferred embodiments of the present invention will be described below.

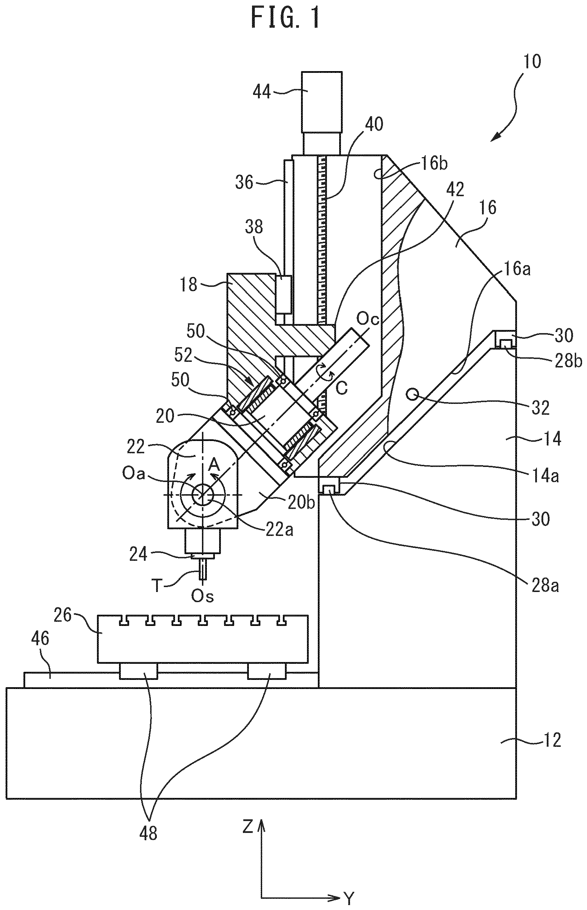

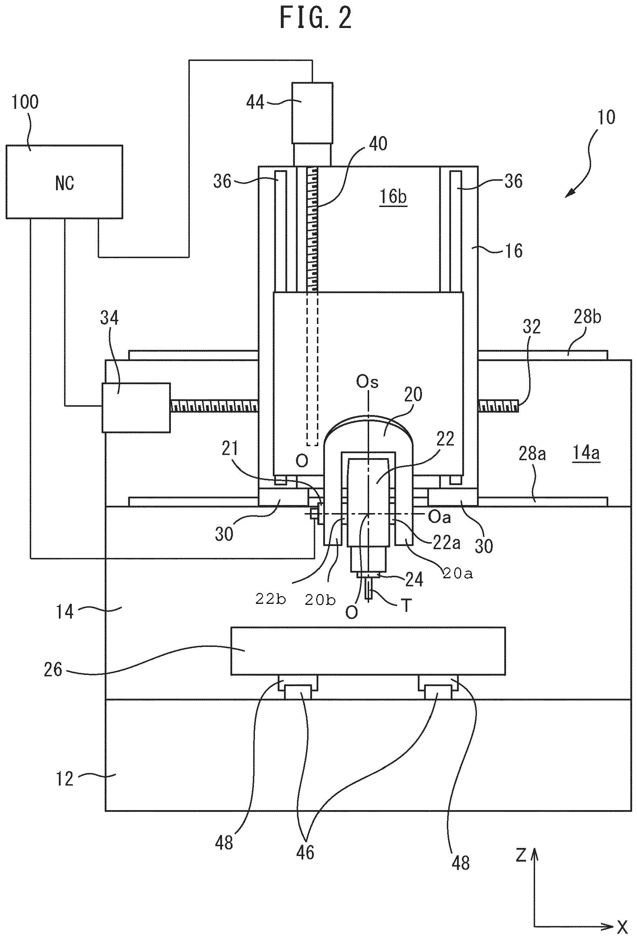

FIGS. 1 and 2 illustrate an example of a machine tool having two rotary feed axes for controlling the posture of a tool and three linear feed axes for moving the position of a workpiece relative to the tool. The machine tool 10 comprises a bed 12 as a base affixed to a floor of a factory, a column 14 which is attached to and stands on an upper surface of the bed 12 on a rear end side (the right side in FIG. 1) of the bed 12, a table 26 which is provided on an upper surface of a front portion (the left side in FIG. 1) of the bed 12 and which is movable in the frontward and rearward directions or Y-axis directions (left and right directions in FIG. 1) and on which a workpiece W is affixed, a spindle head 22 which is provided above the table 26 and which rotatably supports a spindle 24, a saddle 16 which is provided on the top of the column 14 so as to be movable in the left and right directions or X-axis directions (the direction orthogonal to the surface of the paper of FIG. 1), and a spindle head support unit which is provided on the saddle 16 and which supports the spindle head 22 so as to be capable of rotating about an axis of rotation Oa. The spindle head support unit comprises a Z-axis slider 18 which is attached to the front surface of the saddle 16 so as to be capable of moving in the upward and downward directions or Z-axis directions, and a C-axis pivot shaft 20 which is supported on the Z-axis slider 18 so as to be capable of rotating in the C-axis direction about an inclination axis Oc as a second axis of rotation.

A pair of X-axis guide rails 28 extend in the horizontal X-axis direction (the direction orthogonal to the plane of FIG. 1) on the upper end of the column 14, and a guide block 30 is attached to the column 14 so as to be capable of sliding on the X-axis guide rails 28. A ball screw 32 extending in the X-axis direction and an X-axis servomotor 34 which is connected to one end of the ball screw are provided as an X-axis drive device for reciprocally driving the saddle 16 along the X-axis guide rails 28, and a nut (not illustrated) for engaging with the ball screw 32 is attached to the saddle 16. Furthermore, the top of the column 14 forms an inclined plane 14a. The inclined plane 14a extends obliquely upward from the front side to the back side of the machine tool 10 parallel to the X axis. The angle of the inclined plane 14a can be, for example, 45° with respect to the horizontal plane (XY plane).

A pair of Z-axis guide rails 36 extend in the Z-axis direction (the upward and downward directions in FIGS. 1 and 2), which is the vertical direction, on the front surface of the saddle 16, and a guide block 38 is attached to the Z-axis slider 18 so as to be capable of sliding on the Z-axis guide rails 36. The saddle 16 is provided with, as a Z-axis drive device for reciprocally driving the Z-axis slider 18 along the Z-axis guide rails 36, a ball screw 40 extending in the Z-axis directions and a Z-axis servomotor 44 which is connected to one end of the ball screw 40, and a nut for engaging with the ball screw 40 is attached to the Z-axis slider 18 (FIG. 1 shows a bracket 42 for attachment of the nut).

The C-axis pivot shaft 20 is supported on the lower end of the Z-axis slider 18 so as to be capable of being rotated about the inclination axis Oc by a bearing 50. The inclination axis Oc extends orthogonally to the X-axis from the front surface side obliquely upward toward the back side of the machine tool 10 and substantially parallel to the inclined plane 14a. Though the inclination axis Oc and the inclined plane 14a may be inclined in the same direction, it is more effective if they are nearly parallel. The Z-axis slider 18 further incorporates a C-axis servomotor 52 as a C-axis feed device or a second rotary feed axis device for rotationally driving the C-axis pivot shaft 20. A pair of left and right arms 20a, 20b which extend parallel to the inclination axis Oc are formed on the end on the front side of the C-axis pivot shaft 20. Note that the C-axis pivot shaft 20 is capable of rotating within a predetermined angle range about the inclination axis Oc, for example, with a rotation angle range of ±60° about the origin of the C-axis feed device.

The spindle head 22 supports the spindle 24 so as to be capable of rotating about a spindle axis Os, and a tool T is mounted on the end of the spindle 24. The spindle head 22 is arranged between the pair of left and right arms 20a, 20b of the C-axis pivot shaft 20. The spindle head 22 is supported on the arms 20a, 20b of the C-axis pivot shaft 20 of the spindle head support unit so as to be capable of being rotated, in the A-axis direction about the axis of rotation Oa as the first axis of rotation orthogonal to the inclination axis Oc, by A-axis pivot shafts 22a, 22b formed on both sides thereof. An A-axis servomotor 21 connected to one of the A-axis pivot shafts 22a, 22b (A-axis pivot shaft 22a in the present embodiment) is incorporated as an A-axis feed device or first rotary feed axis device in one of the arms 20a, 20b (the arm 20a in the present embodiment).

Note that the inclination axis Oc passes through the vicinity of the intersection of the spindle axis Os of the spindle 24 and the axis of rotation Oa. Furthermore, as shown in FIG. 2, the rotary position of the C-axis feed device in which the axis of rotation Oa is parallel to the horizontal X-axis is the origin position of the C-axis. Further, when the C-axis is in the origin position, the rotary position of the A-axis feed device in which the spindle axis Os of the spindle 24 is vertical (parallel to the Z-axis) is the origin position of the A-axis. When the A-axis is in the origin position, the spindle 24 is oriented downward so as to face the table 26.

When the A-axis and the C-axis are in their respective origin positions, the spindle 24 end surface and the tool T mounted on the spindle 24 face the table 26 on which the workpiece (not illustrated) is attached. A pair of Y-axis guide rails 46 extend in the horizontal Y-axis direction (the left and right directions of FIG. 1) on the upper surface of the bed 12, and a guide block 48 which is capable of sliding on the Y-axis guide rails 46 is attached to the table 26. The bed 12 is further provided with, as a Y-axis feed device for reciprocally driving the table 26 along the Y-axis guide rails, a ball screw (not illustrated) which extends in the Y-axis directions and a Y-axis servomotor (not illustrated) connected to one end of the ball screw, and a nut (not illustrated) for engaging with the ball screw is attached to the table 26. Preferably, a recess 16b is formed in the front surface of the saddle 16 so that the Z-axis ball screw 40 can be arranged within the recess 16b.

The X-axis servomotor 34, the Y-axis servomotor, the Z-axis servomotor 44, the A-axis servomotor 21, and the C-axis servomotor 52 are connected to an NC device 100 (FIG. 2) of the machine tool 10 and are controlled by the NC device 100.

In the machine tool 10, by inclining the C-axis pivot shaft 20 on the column 14 side, overhang of the movable body including the two rotary feed axes (the A-axis feed device and the C-axis feed device) and the spindle head 22 with respect to the column 14 can be reduced, and the center of gravity position of the movable body can be shifted to the column 14 side. As a result, deformation of the column 14 and saddle 16 can be reduced. Furthermore, when the movable body moves, deformation of the saddle 16 and the Z-axis slider 18 during acceleration/deceleration is reduced. At least a part of the spindle head support unit can be arranged in the recess 16b of the saddle 16. As a result, it is possible to further reduce the overhang of the movable body with respect to the column 14.

If the spindle axis Os is coincident with the inclination axis Oc, which is the axis of rotation of the C-axis pivot shaft 20, even if the changes in tool posture commanded by the machining program are small, the tool posture actually changes significantly, whereby the speeds of the rotary feed axes and the linear feed axes can increase rapidly. Such a problem is commonly referred to as a machine tool singularity problem. In the present invention, in order to prevent such a singularity problem by means of hardware, a restricting means for limiting the rotational feed range of the A-axis is provided. In the embodiment described above, the machine tool 10 comprises a stopper 54 provided on the C-axis pivot shaft 20 as restricting means for limiting so that the spindle axis Os and the inclination axis Oc, which is the axis of rotation of the C-axis pivot shaft 20, do not become coincident.

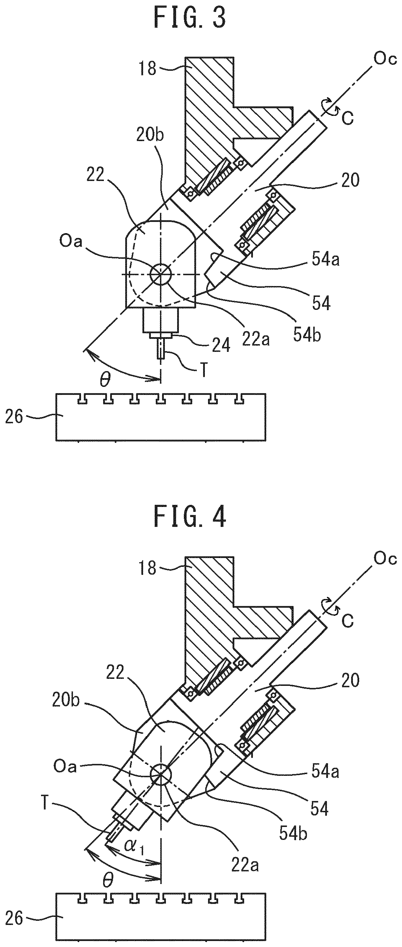

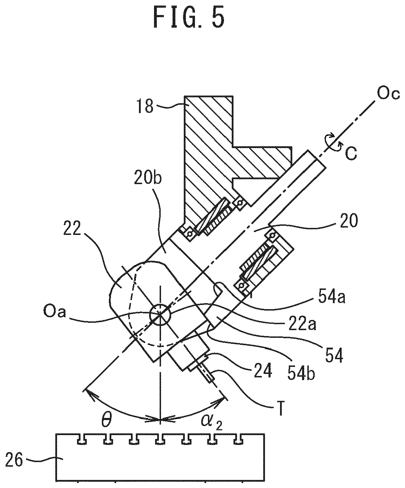

Referring to FIGS. 3 to 5, the machine tool 10 further comprises the stopper 54 provided on the C-axis pivot shaft 20 as restricting means for limiting the A-axis pivot range. The stopper 54 has a first abutment surface 54a for limiting the positive A-axis direction rotational range and a second abutment surface 54b for limiting the negative A-axis direction rotational range. In the example of FIGS. 3 to 5, the angle of rotation of the A-axis is defined as α, and when the A-axis is in the rotational position α = α1 (FIG. 4) in the position direction from the origin (α = 0), the first abutment surface 54a of the stopper 54 abuts the side surface of the spindle head 22, which prevents rotational movement of the spindle head 22 and defines the upper limit of the rotational movement of the A-axis, and conversely, when the A-axis is in the rotary position α = -α2 (FIG. 5) in the negative direction from the origin (α = 0), the second abutment surface 54b of the stopper 54 abuts the side surface of the spindle head 22, which prevents rotational movement of the spindle head 22 and defines the lower limit of the rotational movement of the A-axis, and thus, the A-axis can rotationally move the spindle head 22 in the range α1 ≤ α ≤ α2. Thus, the spindle head 22 is rotated and fed in the A-axis direction between a first rotational position (α = α1) and a second rotational position (α = -α2).

In the present embodiment, since the axis of rotation Oa as the first axis of rotation, which is the center of rotation of the A-axis, intersects the inclination axis Oc, though the spindle axis Os and the inclination axis Oc are coincident when α1 = θ, when the axis of rotation Oa does not intersect the inclination axis Oc, the spindle axis Os does not become coincident with the inclination axis Oc. In such a case, the stopper 54 as restricting means is formed so as to prevent the spindle axis Os from becoming parallel to the inclination axis Oc.

Note that in the present embodiment, the direction (clockwise direction in FIGS. 3 to 5) in which the tool T rotates and moves upward from the origin of the A-axis at which the end surface of the spindle 24 on which the tool T is mounted is oriented downward to face the table 26, as shown in FIG. 3, toward the front of the machine tool 10 (left in FIGS. 3 to 5), as shown in FIG. 4, is defined as the positive A-axis direction.

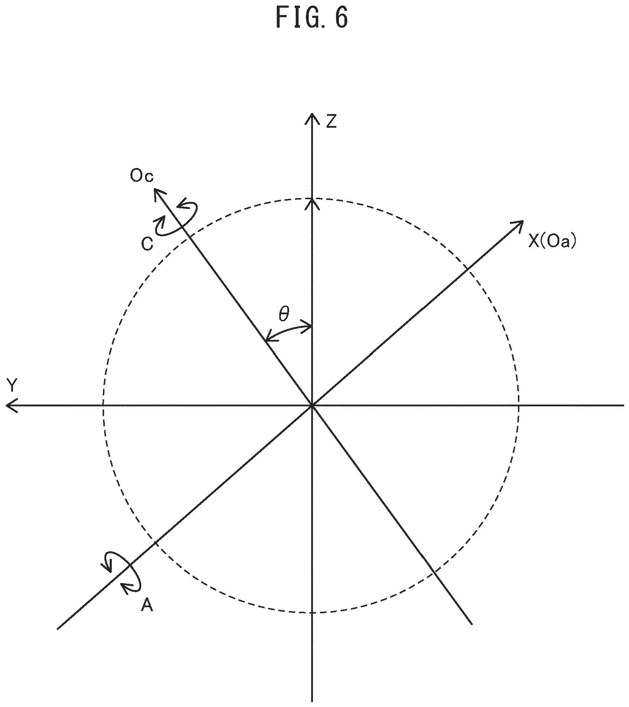

Referring to FIG. 6, the axis of rotation Oa as the first axis of rotation, which is the center of rotation of the A-axis, extends parallel to the X-axis, and the inclination axis Oc as the second axis of rotation, which is the center of rotation of the C-axis, is orthogonal to the axis of rotation Oa and is inclined by an inclination angle θ relative to the Z-axis, which is the vertical direction. Specifically, in FIG. 6, the left side is the front direction of the machine tool 10 and the upper side is the direction of the machine tool 10 oriented toward the table 26. The inclination angle of the C-axis can be set within the range of 30° < θ < 45°. Note that in FIGS. 6 to 8, the arrows represent unit vectors along the spindle axis Os in which the tip direction of the tool T is the positive direction.

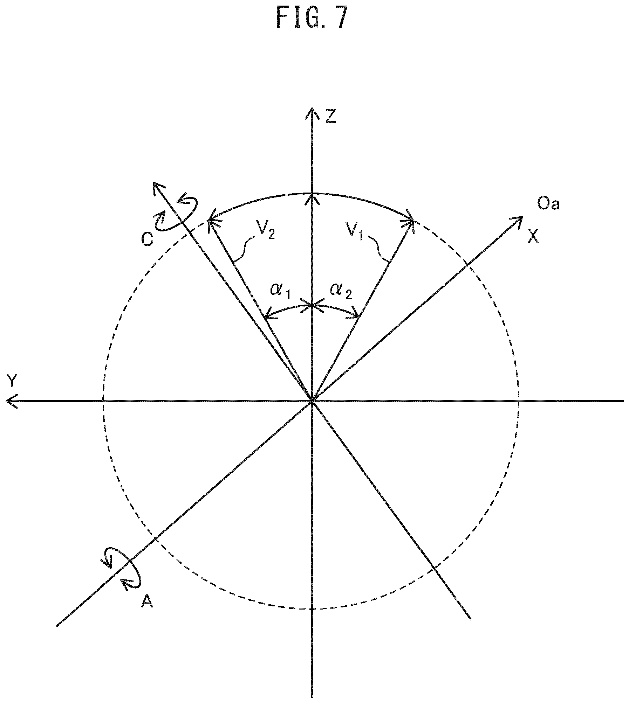

Referring to FIG. 7, the A-axis rotational feed range α becomes α = α1 + α2 with the origin (Z-axis, which is the vertical direction) interposed therebetween. Though the maximum rotational angle α1 in the positive direction from the origin of the A-axis and the maximum rotational angle α2 in the negative direction can be different values, α1 may be equal to α2. As an example, the following can be satisfied α1 = α2 = 30°. In this case, the rotational feed range of the A-axis becomes -30° ≤ α ≤ 30°.

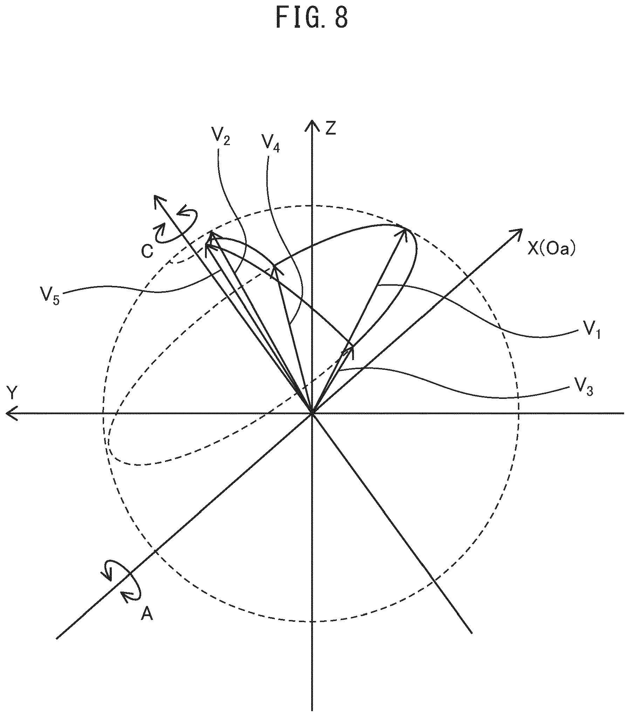

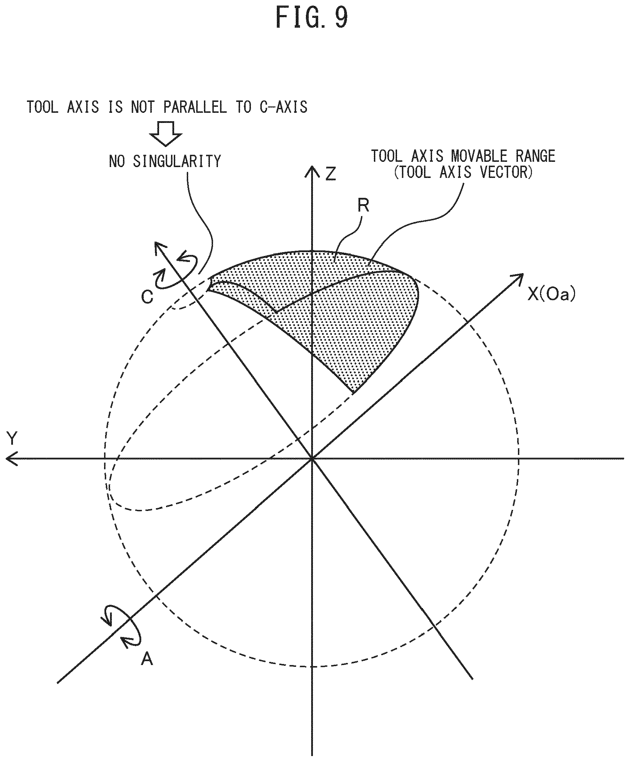

Further, referring to FIG. 8, vector V1 represents the tip direction of the tool T when the A-axis is in the α = 0 origin position and the C-axis is in the minimum rotational angle position, vector V2 represents the tip direction of the tool T when the A-axis is in the α = 0 origin position and the C-axis is in the maximum rotational angle position, vector V3 represents the tip direction of the tool T when the A-axis is in the minimum rotational angle position or the α = -α2 second rotational position and the C-axis is in the minimum rotational angle position, vector V4 represents the tip direction of the tool T when the A-axis is in the minimum rotational angle position or the α = -α2 second rotational position and the C-axis is in the maximum rotational angle position, and vector V5 represents the tip direction of the tool T when the A-axis is in the maximum rotational angle position or the α = α1 first rotational position and the C-axis is in the maximum rotational angle position. Note that the vector representing the tip direction of the tool T when the A-axis is in the maximum rotational angle position or the α = α1 first rotational position and the C-axis is in the minimum rotational angle position has been omitted from FIG. 8 in order to clearly illustrate the drawing. Thus, in the present embodiment, the range in which the tip of the tool T can be arranged is represented by range R in FIG. 9.

In the embodiment described above, since the table 26 is arranged below the C-axis pivot shaft 20, the tool T is arranged below the inclination axis Oc. Thus, if the first abutment surface 54a of the stopper 54 is formed so that α1 < θ, the singularity problem will not occur.

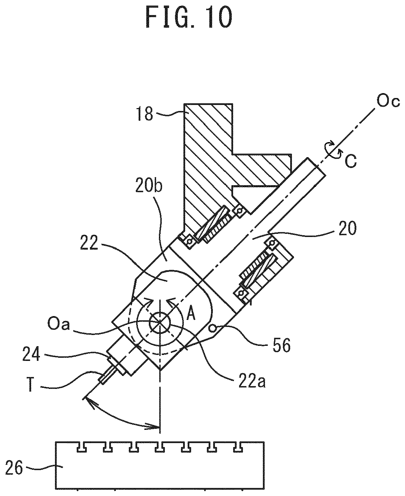

In the embodiment described above, the restricting means comprises the stopper 54 provided on the C-axis pivot shaft 20, but the present invention is not limited thereto. The restricting means may comprise, for example, a limit switch 56 (FIG. 10) provided on the C-axis pivot shaft 20 and connected to the NC device 100. In this case, when the C-axis feed device is in the α = α1 or α = α2 rotational position, the NC device 100 of the machine tool 10 can stop the driving of the C-axis servomotor 52 based on a signal from the limit switch 56.

In the embodiment described above, the angle α1 defining the upper limit of the rotational feeding of the C-axis feed device or the first rotational position is closer to the inclination angle θ of the inclination axis Oc so that the range R in which the tip of the tool T can be arranged can be widened, and the angle α1 can be determined in advance by experimentation or the like within a range in which the singularity problem does not occur.

### REFERENCE SIGNS LIST

- 10: Machine Tool
- 12: Bed
- 14: Column
- 14a: Inclined Plane
- 16: Saddle
- 16b: Recess
- 18: Z-axis Slider
- 20: C-axis Pivot Shaft
- 20a: Arm
- 20b: Arm
- 21: A-axis Servomotor
- 22: Spindle Head
- 22a: A-axis Pivot Shaft
- 22b: A-axis Pivot Shaft
- 24: Spindle
- 26: Table
- 28: X-axis Guide Rail
- 34: X-axis Servomotor
- 36: Z-axis Guide Rail
- 42: Bracket
- 44: Z-axis Servomotor
- 46: Y-axis Guide Rail
- 50: Bearing
- 52: C-axis Servomotor
- 54: Stopper
- 56: Limit Switch

## Claims

1. A machine tool (10) including two rotary feed axes (A, C) for controlling the posture of a tool (T) and a linear feed axis (X, Y, Z) for moving the position of a workpiece relative to the tool (T), the machine tool (10) comprising:
a spindle (24) on an end of which the tool (T) is mounted,
a spindle head (22) for supporting the spindle (24) so as to be capable of rotating about a spindle axis of rotation (Os),
a spindle head support unit for supporting the spindle head (22) so as to be rotatable about a first axis (Oa) extending orthogonal to the spindle axis of rotation (Os),
a first rotary feed axis device (21) which is provided on the spindle head support unit and which rotates the spindle head (22) about the first axis (Oa),
a saddle (16) which supports the spindle head support unit so as to be rotatable about a second axis (Oc) which is orthogonal to the first axis (Oa) and which intersects the vertical direction at a predetermined inclination angle,
a second rotary feed axis device (52) which is provided on the saddle (16) and which rotatably feeds the spindle head support unit about the second rotary axis (Oc),
the spindle head support unit comprises a pair of left and right arms (20a, 20b) which are formed on a C-axis rotary feed axis which is supported, so as to be capable of rotating about the second axis (Oc), on a Z-axis slider (18) which is attached to a front surface of the saddle (16) so as to be capable of reciprocating in the vertical direction, **characterised in that** it further comprises
a restricting means for restricting a rotary feed range of the first rotary feed axis device (21) so that the spindle axis of rotation (Os) is not parallel or coincident to the second axis (Oc), wherein
the restricting means comprises a stopper (54) formed on the C-axis rotary feed axis so as to be capable of contacting the spindle head (22) or a limit switch (56) arranged on the C-axis rotary feed axis.

2. The machine tool (10) according to claim 1, wherein the restricting means regulates an upper limit of the rotary feed range of the first rotary feed axis device (21) so that the angle that the rotary axis of the spindle (24) forms relative to the vertical direction is smaller than an inclination angle of a central axis of the spindle axis of rotation (Os) relative to the vertical direction.

## Patentansprüche

1. Werkzeugmaschine (10) mit zwei rotierenden Vorschubachsen (A, C) zum Steuern der Stellung eines Werkzeugs (T) und einer linearen Vorschubachse (X, Y, Z) zum Bewegen der Position eines Werkstücks relativ zu dem Werkzeug (T), wobei die Werkzeugmaschine (10) umfasst:
eine Spindel (24), an deren einem Ende das Werkzeug (T) montiert ist,
einen Spindelkopf (22), der die Spindel (24) so stützt, dass sie sich um eine Spindeldrehachse (Os) drehen kann,
eine Spindelkopfstützeinheit zum Stützen des Spindelkopfes (22), so dass er um eine erste Achse (Oa) drehbar ist, die sich orthogonal zur Spindeldrehachse (Os) erstreckt,
eine erste Drehvorschubachsenvorrichtung (21), die an der Spindelkopfstützeinheit vorgesehen ist und die den Spindelkopf (22) um die erste Achse (Oa) dreht,
einen Sattel (16), der die Spindelkopfstützeinheit so stützt, dass sie drehbar um eine zweite Achse (Oc) ist, die orthogonal zur ersten Achse (Oa) verläuft und die vertikale Richtung in einem vorbestimmten Neigungswinkel schneidet,
eine zweite Drehvorschubachsenvorrichtung (52), die auf dem Sattel (16) vorgesehen ist und die Spindelkopfstützeinheit um die zweite Drehachse (Oc) drehbar vorschiebt,
wobei die Spindelkopfstützeinheit ein Paar linke und rechte Arme (20a, 20b) umfasst, die auf einer drehbaren Vorschubachse der C-Achse ausgebildet sind, die, um sich um die zweite Achse (Oc) drehen zu können, auf einem Schieber (18) der Z-Achse gestützt ist, der an einer vorderen Fläche des Sattels (16) befestigt ist, um sich in vertikaler Richtung hin- und herbewegen zu können, **dadurch gekennzeichnet, dass** sie ferner umfasst
ein Begrenzungsmittel zum Begrenzen eines Drehvorschubbereichs der ersten Drehvorschubachsenvorrichtung (21), so dass die Spindeldrehachse (Os) nicht parallel oder deckungsgleich mit der zweiten Achse (Oc) ist, wobei das Begrenzungsmittel einen Anschlag (54), der auf der drehbaren Vorschubachse der C-Achse so ausgebildet ist, dass er den Spindelkopf (22) berühren kann, oder einen auf der drehbaren Vorschubachse der C-Achse angeordneten Begrenzungsschalter (56) umfasst.

2. Werkzeugmaschine (10) nach Anspruch 1, wobei das Begrenzungsmittel eine obere Grenze des Drehvorschubbereichs der ersten Drehvorschubachsenvorrichtung (21) so regelt, dass der Winkel, den die Drehachse der Spindel (24) relativ zur vertikalen Richtung bildet, kleiner ist als ein Neigungswinkel einer Mittelachse der Spindeldrehachse (Os) relativ zur vertikalen Richtung.

## Revendications

1. Machine-outil (10) comprenant deux axes d'alimentation rotatifs (A, C) pour commander la posture d'un outil (T) et un axe d'alimentation linéaire (X, Y, Z) pour déplacer la position d'une pièce à usiner par rapport à l'outil (T), la machine-outil (10) comprenant :
une broche (24) sur une extrémité de laquelle l'outil (T) est monté,
une tête de broche (22) pour supporter la broche (24) de manière à pouvoir tourner autour d'un axe de rotation de broche (Os),
une unité de support de tête de broche pour supporter la tête de broche (22) de manière à être rotative autour d'un premier axe (Oa) s'étendant orthogonalement à l'axe de rotation de broche (Os),
un premier dispositif d'axe d'alimentation rotative (21) qui est prévu sur l'unité de support de tête de broche et qui fait tourner la tête de broche (22) autour du premier axe (Oa).
une selle (16) qui supporte l'unité de support de tête de broche de manière à être rotative autour d'un second axe (Oc) qui est orthogonal au premier axe (Oa) et qui recoupe la direction verticale selon un angle d'inclinaison prédéterminé,
un second dispositif d'axe d'alimentation rotative (52) qui est agencé sur la selle (16) et qui alimente en rotation l'unité de support de tête de broche autour du second axe de rotation (Oc),
l'unité de support de tête de broche comprend une paire de bras gauche et droit (20a, 20b) qui sont formés sur un axe d'alimentation rotative d'axe C qui est supporté, de manière à pouvoir tourner autour du second axe (Oc), sur un coulisseau d'axe Z (18) qui est fixé à une surface avant de la selle (16) de manière à pouvoir effectuer un mouvement de va-et-vient dans la direction verticale, **caractérisé en ce qu'**elle comprend en outre
des moyen de restriction pour restreindre une plage d'alimentation rotative du premier dispositif d'axe d'alimentation rotative (21) de sorte que l'axe de rotation de la broche (Os) ne soit pas parallèle ou ne coïncide pas avec le second axe (Oc), dans lequel les moyens de restriction comprennent une butée (54) formée sur l'axe d'alimentation rotative de l'axe C de manière à pouvoir venir en contact avec la tête de broche (22) ou un commutateur de fin de course (56) agencé sur l'axe d'alimentation rotative d'axe C.

2. Machine-outil (10) selon la revendication 1, dans laquelle les moyens de restriction régulent une limite supérieure de la plage d'alimentation rotative du premier dispositif d'axe d'alimentation rotative (21) de sorte que l'angle que l'axe de rotation de la broche (24) forme par rapport à la direction verticale est inférieur à un angle d'inclinaison d'un axe central de l'axe de rotation de broche (Os) par rapport à la direction verticale.
